# EUROPEAN PATENT APPLICATION

(11) **EP 4 026 699 A1**
(43) Date of publication of application: **13.07.2022**
(21) Application number: 20860594.9
(22) Date of filing: 18.08.2020
(51) Int. Cl.: B41M 3/00, B05D 3/06, B05D 7/04, B05D 7/24, B32B 27/16, B32B 27/36, B32B 27/40, B41M 1/08, B41M 1/30, C09D 11/101

(54) **METHOD FOR MANUFACTURING PRINTED MATTER**

(30) Priority: 03.09.2019 JP 2019160394; 27.02.2020 JP 2020031217
(71) Applicant: Toray Industries, Inc., Tokyo, 103-8666 (JP)
(72) Inventor: SADAKUNI, Hironobu, Shiga 520-8558 (JP); INOUE, Takejiro, Shiga 520-8558 (JP); KOSHIMIZU, Noboru, Shiga 520-8558 (JP); TSUTSUMI, Yusuke, Shiga 520-8558 (JP)
(74) Representative: Kador & Partner PartG mbB
(86) International application number: PCT/JP2020/031077
(87) International publication number: WO 2021/044838

(57) **Abstract**

A problem to be addressed by the present invention is to provide a method of producing a printed material by printing an active energy ray-curable printing ink on a film, wherein the printed material has good adhesion between the ink and the film even after undergoing boiling treatment for boiling sterilization or retorting sterilization. Such a problem is solved by a method of producing a printed material, including the steps of: printing an ink on a film; and irradiating the ink-printed face with an active energy ray; wherein the film contains: a polyamide film layer; and a layer that, as the outermost layer of at least one face of the film, contains a polyurethane obtained by use of a polycarbonate polyol as a polyol component.

## Description

### TECHNICAL FIELD

The present invention relates to a method of producing a printed material.

### BACKGROUND ART

In recent years, use of an active energy ray-curable printing ink that can be instantaneously cured by irradiation with an active energy ray such as ultraviolet light has been expanding in many fields in view of installations, safety, environment, and high productivity. In addition, an active energy ray-curable lithographic ink for which a washing solution containing no volatile solvent and containing water as a main component can be used is disclosed in the context where a large amount of petroleum solvent is used as a washing solution for an ink to be used in printing processes.

An active energy ray-curable printing ink can be cured at room temperature in a short time, and thus, is considered to be an optimal material for forming a coating on a plastic substrate lacking in heat resistance. However, in some of the cases where an active energy ray-curable printing ink is used for printing on a film, the adhesion between the ink and the film is insufficient.

In this context, an active energy ray-curable printing ink having excellent adhesion to a film is being developed (see, for example, Patent Literature 1). In addition, a technology by which the surface of a film is modified to enhance adhesion between an ink and the film is being developed (see, for example, Patent Literature 2 to 3).

### Citation List

### Patent Literature

Patent Literature 1: JP2015-168730A
Patent Literature 2: JP2011-94125A
Patent Literature 3: WO2018/163941

### SUMMARY OF INVENTION

### Technical Problem

However, in some of the cases where one of such technologies is used, the adhesion between an ink and a film is insufficient. In particular, in cases where a food package film is printed, the adhesion between an ink and the film can be much decreased when the ink-printed film is boiled for boiling sterilization or retorting sterilization.

In view of this, an object of the present invention is to provide a method of producing a printed material that has good adhesion between the ink and the film even after undergoing boiling treatment such as boiling sterilization or retorting sterilization.

### Solution to Problem

The present invention includes a method of producing a printed material, including the steps of: printing an ink on a film; and irradiating the ink-printed face with an active energy ray; wherein the film contains: a polyamide film layer; and a layer that, as the outermost layer of at least one face of the film, contains a polyurethane obtained by use of a polycarbonate polyol as a diol component.

### Advantageous Effects of Invention

A method of producing a printed material according to the present invention makes it possible to retain adhesion well between an ink and a film even after undergoing boiling treatment such as boiling sterilization or retorting sterilization.

### BRIEF DESCRIPTION OF DRAWINGS

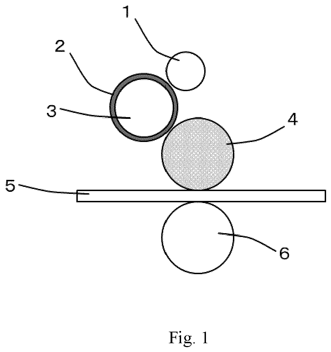

FIG. 1 is a side view depicting one example of a method of producing a printed material according to an embodiment of the present invention.

### DESCRIPTION OF EMBODIMENTS

Below, suitable embodiments of a method of producing a printed material according to the present invention will be described in detail. However, the present invention is not to be construed as limited to the below-illustrated embodiments, and can be variously modified and embodied in accordance with the purpose or application to the extent that such modifications do not depart from the spirit of the present invention.

In a method of producing a printed material according to an embodiment of the present invention, an ink is printed on a film, and then, the ink-coated face is irradiated with an active energy ray. In addition, the film is characterized by containing: a polyamide film layer (hereinafter, this layer is referred to as a "polyamide substrate layer" in some cases); and a layer that, as the outermost layer of at least one face of the film, contains a polyurethane obtained by use of a polycarbonate polyol as a polyol component.

A specific embodiment of such a method of producing a printed material is, for example, as below-mentioned. First, an ink coating is produced on a face of a film in a step of coating the film with an ink. Next, in a step of irradiating the ink coating thus produced on the film with an active energy ray, the ink is cured to obtain a printed material.

Examples of methods of coating a film with an ink include known methods such as flexography, lithography, gravure printing, screen printing, bar coater coating, and the like. In particular, lithography is preferably used because lithography makes it possible to coat a material to be printed with an ink at high speed, and at the same time, to produce large quantities of printing at low cost.

Lithography encompasses the method in which a waterless offset printing plate is used and the method in which an offset printing plate is used. In a method of producing a printed material according to the present invention, a waterless offset printing plate is preferably used. In a method in which a waterless offset printing plate is used, dampening water is not used during printing, and thus, radicals can be generated stably in the ink being irradiated with an active energy ray. This method makes it possible to cure the ink sufficiently, and retain adhesion sufficiently between the ink and the film.

The ink on a printed material preferably has a thickness of 0.1 to 50 µm. The ink having a thickness within this range makes it possible to retain good printing quality, and at the same time, to decrease the ink cost, without decreasing the adhesion between the ink and the film.

Next, FIG. 1 is used to describe one example of a method of producing a printed material according to an embodiment of the present invention, in which embodiment a waterless offset printing plate is used. In this regard, an example in which a blanket 4 is used will be described below, but the present invention is not limited to the example. It is possible that, without using the blanket 4, an active energy ray-curable ink from an ink roller 1 is directly adhered to the surface of a lithography plate 2 attached to a printing cylinder 3, and then, the ink is directly transferred to a lithographic substrate. In addition, an example in which the ink is supplied from above a film 5 will be described below, and the ink may be supplied from below the film 5. In this regard, FIG. 1 does not include a mechanism for radiating an active energy ray.

First, the lithography plate 2 is attached to the printing cylinder 3. The lithography plate 2 has an ink-repellent layer and a thermosensitive layer (neither is shown) in a desired pattern on the surface of the lithography plate.

Next, ink is supplied to the ink roller 1. The ink supplied to the ink roller 1 adheres to the surface of the thermosensitive layer on the surface of the lithography plate 2 attached to the printing cylinder 3. The ink does not adhere to the ink-repellent layer.

The ink adhered to the surface of the thermosensitive layer on the lithography plate 2 is transferred to the surface of the blanket 4 at the point of contact with the blanket 4. The ink adhered to the blanket 4 is transferred to the film 5 at the point of contact with the film 5 disposed on a support roller 6.

Then, the film 5 is irradiated with an active energy ray so that the ink is cured to obtain a printed material. The active energy ray is subject to no particular limitation provided that such a ray has an excited energy desired for the curing reaction of the ink. Examples of such rays to be preferably used include ultraviolet light and an electron beam. In particular, an electron beam is preferably used to enhance adhesion between a film and an ink.

In cases where ultraviolet light is used for curing, an ultraviolet light irradiation device such as a high-pressure mercury lamp, xenon lamp, metal halide lamp, or light-emitting diode is preferably used. Using a light-emitting diode that emits a bright line having a wavelength of 350 to 420 nm is preferable from a viewpoint of inhibition of heat generation and also from viewpoints of power saving and cost reduction. For example, in cases where a light-emitting diode that emits a bright line having a wavelength of 385 nm is used, it is preferable from a productivity viewpoint that curing is performed using a light-emitting diode having an illuminance having an irradiation intensity of 5 to 20 mW/cm² with a conveyor at a conveying speed of 50 to 150 m/minute.

In cases where an ink is cured using an electron beam, an electron beam apparatus having an energy ray of 100 to 500 keV is preferably used. The curing performed using an electron beam is characterized, for example, in that even an ink containing a dye such as a pigment is less likely to become less transmissive, thus making it more likely that the inside of the ink is cured. This electron dose is measured using a film dosimeter, preferably a radiochromic dosimeter.

In the present invention, an electron dose desired to cure an ink using an electron beam depends on the film thickness of the ink, the density of the pigment, and the like, and is preferably 5 kGy to 100 kGy, more preferably 10 kGy to 50 kGy, still more preferably 15 to 30 kGy.

In the above-illustrated production method, the rotational speed of each roller is not subject to any particular limitation, and can be suitably set in accordance with the quality desired for a printed material, the tact time, and the property of the ink.

After printing, the ink remaining on the ink roller 1, the lithography plate 2, and the blanket 4 can be easily removed using water or an aqueous solution containing water as a main component.

### (Film)

In the present invention, a film to be used contains: a polyamide substrate layer; and a layer that, as the outermost layer of at least one face of the film, contains a polyurethane obtained by use of a polycarbonate polyol as a polyol component (hereinafter, this layer is referred to as an "easy adhesion layer" in some cases). A polyurethane is usually synthesized using a polyisocyanate and a polyol as raw materials, and changing the kind of the polyol in particular significantly varies the characteristics associated with heat resistance and water resistance. In the present invention, using a polycarbonate polyol as a polyol component makes it possible to enhance the heat resistance and water resistance of the polyurethane. That such a layer containing a polyurethane is the outermost layer of the film makes it possible to retain adhesion well between the ink and the ink-coated film even after undergoing boiling treatment for boiling sterilization or retorting sterilization.

Examples of well-known polyols include diols having two hydroxyl groups and triols having three hydroxyl groups, and any one of a diol and a triol is suitably used in the present invention. Accordingly, any one of a polycarbonate diol and a polycarbonate triol is preferably used, and a polycarbonate diol is more suitably used from viewpoints of production quantity and cost.

A polycarbonate diol can be synthesized through transesterification reaction using a dihydroxy compound and a carbonate compound as raw material monomers.

Examples of dihydroxy compounds include: 2,2-dialkyl-substituted 1,3-propane diols such as 2,2-dimethyl-1,3-propane diol, 2-ethyl-2-butyl-1,3-propane diol, 2,2-diethyl-1,3-propane diol, and 2-pentyl-2-propyl-1,3-propane diol; tetraalkyl-substituted alkylene diols such as 2,2,4,4-tetramethyl-1,5-pentane diol and 2,2,9,9-tetramethyl-1,10-decane diol; diols containing a cyclic group, such as 3,9-bis(1,1-dimethyl-2-hydroxyethyl)-2,4,8,10-tetraoxaspiro[5.5] undecane; 2,2-diphenyl-1,3-propane diol; 2,2-divinyl-1,3-propane diol; 2,2-diethynyl-1,3-propane diol; 2,2-dimethoxy-1,3-propane diol; bis(2-hydroxy-1,1-dimethylethyl) ether; bis(2-hydroxy-1,1-dimethylethyl) thioether; 2,2,4,4-tetramethyl-3-cyano-1,5-pentane diol; and the like.

In addition, the carbonate compound is not subject to any limitation provided that such a compound does not impair the present invention, and examples of carbonate compounds include dialkyl carbonate, diaryl carbonate, and alkylene carbonate. Specific examples include dimethyl carbonate, diethyl carbonate, dibutyl carbonate, diphenyl carbonate, ethylene carbonate, hexamethylene carbonate, and the like, and alkylene carbonates such as ethylene carbonate and hexamethylene carbonate are preferable from viewpoints of providing high flexibility and enhancing the adhesion.

A polyisocyanate that is generally used is a diisocyanate having two isocyanate groups in one molecule. Specific examples include, but are not limited to: aromatic isocyanates such as 1,3-phenylene diisocyanate, 1,4-phenylene diisocyanate, 2,4-tolylene diisocyanate (TDI), 2,6-tolylene diisocyanate, 4,4'-diphenyl methane diisocyanate (MDI), 2,4-diphenyl methane diisocyanate, and 1,5-naphthylene diisocyanate; aliphatic isocyanates such as ethylene diisocyanate, tetramethylene diisocyanate, hexamethylene diisocyanate (HDI), dodecamethylene diisocyanate, 1,6,11-undecane triisocyanate, 2,2,4-trimethyl hexamethylene diisocyanate, and lysine diisocyanate; and alicyclic isocyanates such as isophorone diisocyanate (IPDI), 4,4'-dicyclohexylmethane diisocyanate (hydrogenated MDI), cyclohexylene diisocyanate, and methylcyclohexylene diisocyanate (hydrogenated TDI).

As above-mentioned, the present invention includes, as the outermost layer, a layer containing a polyurethane obtained by use of a polycarbonate polyol as a polyol component, and it is preferable that the polyurethane used in the layer has substantially no other copolymerized polymer species. The term "substantial" as used herein means that the amount of the repeating unit of another polymer species, for example, an alkyl acrylate ester unit or an alkyl methacrylate ester unit is 5 mol% or less, preferably 1 mol or less, in the molecule.

In the present invention, it is possible to use a film in which such a polyurethane-containing layer (easy adhesion layer) as above-mentioned is preliminarily provided on the surface of a substrate film, or it is possible to use such a polyurethane-containing layer as above-mentioned that is later formed on the surface of a film as a substrate by a coating method or the like.

Examples of methods to be preferably used to form an easy adhesion layer include, but are not limited particularly to, a coating method. Specifically, the method encompasses: a method of performing the formation in a step other than a step of producing a substrate, what is called an off-line coating method; and a method of performing the coating in a production step, what is called an in-line coating method.

Examples of off-line coating methods include a roll coating method, dip coating method, bar coating method, die coating method, gravure coating method, and the like, and these methods can be used in combination.

An in-line coating method is preferably used from viewpoints of production cost and film thickness uniformity. An in-line coating method refers to a method in which coating is performed at an arbitrary stage from the melt-extrusion of a resin as a substrate to the reel-up of the resin. It is usual that coating is performed on any of the following substrates: a substantially noncrystalline unstretched (unoriented) substrate (A) obtained through melt-extrusion followed by rapid cooling; an uniaxially-stretched (uniaxially-oriented) substrate (B) obtained through the subsequent stretching in the longitudinal direction; a biaxially-stretched (biaxially-oriented) substrate (C) obtained through further stretching in the width direction before heat treatment.

A coating method that can be used is any known technique, and examples of such methods that can be used include a reverse coating method, spray coating method, bar coating method, gravure coating method, rod coating method, die coating method, and the like. It is preferable to adopt a method in which any of the above-mentioned substrates (A) and (B) before undergoing completion of the crystalline orientation is coated with a coating liquid, the substrate coated with the coating liquid is then stretched uniaxially or biaxially, and heat-treated at a temperature higher than the boiling point of the solvent to undergo completion of the crystalline orientation of the resin as a substrate, and the resulting resin is provided with an easy adhesion layer. This method makes it possible to perform the film formation of the substrate and the application and drying of the coating liquid at the same time, and thus, is advantageous from a production cost viewpoint. In addition, it is easier to make the thickness of the easy adhesion layer thinner to perform stretching after coating. Among these, an excellent method is a method in which the substrate (B) uniaxially-stretched in the longitudinal direction is coated with a coating liquid, then stretched in the width direction, and heat-treated.

In the present invention, the film on which an ink is printed preferably has a thickness of 5 µm or more and 200 µm or less, preferably 10 µm or more and 30 µm or less.

In the present invention, the number of radicals present in the outer layer of a film on which an ink is printed is preferably 2 × 10¹⁸ radicals or more per 1 g of the film, that is, 2 × 10¹⁸ radicals/g or more, as the film surface on the easy adhesion layer side is irradiated with a 30-kGy (kilogray) electron beam. In addition, the number of radicals is preferably 3.4 × 10¹⁵ radicals or more per 1 cm² of the film, that is, 3.4 × 10¹⁵ radicals/cm² or more, in terms of the number per unit of area. In this regard, the absorbed dose of the electron beam is denoted by unit kGy (kilogray), and 1 kGy denotes the absorption of 1 joule of energy per 1 kg of matter irradiated. When the outer layer of the film is irradiated with an electron beam, radicals are generated in the ink, and as a result, the ink is cured, but the electron beam transmitted through the ink acts also on the outer layer of the film, and thus, radicals are generated from another constituent such as the outer layer of the film, that is, the easy adhesion layer and the polyamide substrate layer present in the vicinity of the surface. Conceivably, the higher the number of radicals present in the outer layer of the film is, the more the cross-linking reaction between the ink and the outer layer of the film is facilitated, hence the higher the adhesion between the printed material as the cured ink and the outer layer of the film.

The number of radicals present in the outer layer of the film, in which the outer layer of the film is irradiated with an electron beam, can be measured using an electron spin resonance (ESR) device. The number of free radicals present in the outer layer of the film radiated with a 30-kGy electron beam is the above-mentioned number of radicals.

In order that the number of radicals generated by irradiating the outer layer of the film with an electron beam can be within the above-mentioned range, the substrate is, for example, a polyethylene film, polypropylene film, polyamide film, or the like. In the present invention, a polyamide film that is easy to coat is used. A polyamide film is a film having excellent physical strengths, such as tensile strength, impact strength, and pinhole strength, and excellent heat resistance.

In the present invention, examples of materials that can be used as a polyamide substrate layer include: "BONYL-Q" manufactured by Kohjin Film & Chemicals Co., Ltd.; and the like.

The ratio v1/v2 of the peak intensity v1 of the stretching vibration of the carbon-nitrogen single bond to the peak intensity v2 of the stretching vibration of the carbon-oxygen double bond is preferably in the range of from 0.5 to 1, as determined by measurements made on the surface on the easy adhesion layer side using an FT-IR-ATR method (hereinafter, the ratio of the peak intensity v1 of the stretching vibration of the carbon-nitrogen single bond to the peak intensity v2 of the stretching vibration of the carbon-oxygen double bond is simply represented by v1/v2). The peak intensity v1 of the stretching vibration of the carbon-nitrogen single bond can be expressed by the area of a peak that appears at and around a wavenumber of approximately 1530 cm⁻¹. In addition, the peak intensity v2 of the stretching vibration of the carbon-oxygen double bond can be expressed by the area of a peak that appears at and around a wavenumber of approximately 1740 cm⁻¹. In this regard, if a peak derived from the polyamide substrate layer is observed, the peak is excluded in the determination of v1/v2.

It is considered that the peak intensity v1 of the stretching vibration of the carbon-nitrogen single bond reflects the existence amount of the urethane bond, and that the peak intensity v2 of the stretching vibration of the carbon-oxygen double bond reflects the existence amount of the carbonate bond due to the polyol. That is, allowing v1/v2 to be 0.5 or more allows the ratio of the urethane bond to be sufficient, thus making it possible to retain adhesion well between the ink and the film. On the other hand, allowing v1/v2 to be 1 or less allows the ratio of the polyol component to be sufficient, thus enabling the easy adhesion layer to have high flexibility and good heat resistance.

An electron beam irradiation device that can be used is any conventionally known such device, and examples of such devices that can be suitably used include a curtain type electron beam irradiation device, a line irradiation type low-energy electron beam irradiation device, and the like.

In the present invention, the surface on the easy adhesion layer side preferably has a surface roughness Ra of 5 to 30 nm. Bringing Ra to 5 nm or more generates an anchor effect on the interface of the ink, thus making it possible to raise the adhesion to an ink. In addition, bringing Ra to 30 nm or less does not impede the wetting of the ink.

The surface roughness Ra can be measured using, for example, an atomic force microscope (AFM) and the like in accordance with the method described in JIS R 1683: 2007.

For Ra to be within the above-mentioned range, it is preferable, for example, that the easy adhesion layer contains microparticles having an average particle diameter D50 of approximately 10 to 20 nm. The amount of the microparticles contained in the easy adhesion layer is preferably, but not limited particularly to, 0.1 to 10 parts by mass with respect to 100 parts by mass of the polyurethane. In this regard, the average particle diameter D50 refers to a particle diameter at which the cumulative percentage of passing material from the smaller-particle-diameter side reaches 50% in a volumetric particle diameter distribution obtained through measurement by dynamic light scattering. Examples of microparticles that are suitably used include silica particles, alumina particles, and the like from viewpoints of dispersibility, stability, and cost.

### (Ink)

An ink to be suitably used in the present invention is an ink that is cured with an active energy ray. Irradiation with an active energy ray enables the ink on a printed material to be cured. When the ink is cured with an active energy ray, internal stress due to cure shrinkage is generally more likely to be generated, thus resulting in becoming a factor which causes a decrease in adhesion between the ink and the film. However, that a film to be printed is such a film as above-mentioned makes it possible to retain the adhesion well between the ink and the film.

One embodiment of an ink to be used in the present invention is an active energy ray-curable printing ink, and a resin to be contained in the ink is preferably (a) an acrylic resin having an acid value of 30 mgKOH/g or more and 250 mgKOH/g or less. The acid value is more preferably 60 mgKOH/g or more and 200 mgKOH/g or less, particularly preferably 75 mgKOH/g or more and 150 mgKOH/g or less. Having an acid value in the range makes it possible to enhance the sensitivity of the ink curing reaction by an active energy ray, and to obtain a good ink cured film even with low-energy irradiation, and in addition, makes it possible to achieve high water resistance. The acid value can be determined in accordance with "3.1 neutralization titration" in the test method of JIS K 0070: 1992.

In addition, the above-mentioned acrylic resin preferably has an ethylenic unsaturated group. Having an ethylenic unsaturated group leads to having high-sensitivity active energy ray-curability, and in addition, affording excellent water resistance to the cured film.

In addition, having an ethylenic unsaturated group in the side chain allows the resin having an ethylenic unsaturated group to be itself curable by irradiation with an active energy ray. Accordingly, the irradiation with an active energy ray allows the ink to be cured by radical reaction between the high-molecular-weight resins, and thus, the irradiation amount of the active energy ray desired for the curing can be small, resulting in affording high-sensitivity active energy ray-curability.

Accordingly, for example, irradiation using ultraviolet light as an active energy ray makes it possible to achieve sufficient ink curability even with a small amount of ultraviolet light radiation in UV printing that involves curing ink instantaneously. This in turn makes it possible that enhancing the printing speed leads to enhancing the productivity significantly, that using a power-saving UV light source (for example, a metal halide lamp or an LED) leads to achieving lower cost, and the like.

Furthermore, the above-mentioned acrylic resin contains an ethylenic unsaturated group, and in addition, has a suitable acid value, and thus, the adhesion is excellent between the ink produced using the resin and the above-mentioned film. This is considered to be because the above-mentioned outer layer of the film contains a polyurethane obtained by use of a polycarbonate polyol as a diol component, thus allowing the carboxyl group contained in the resin in the ink and the amino group or the like present in the surface of the film to form a bond therebetween.

In addition, an ink used in the present invention can preferably contain a resin that is other than the above-mentioned acrylic resin and is a resin having an ethylenic unsaturated group and a carboxyl group. An ink containing such a resin has high-sensitivity active energy ray-curability, and in addition, affords excellent water resistance to the cured film. In addition, the resin other than the acrylic resin preferably has an acid value of 30 mgKOH/g or more and 250 mgKOH/g or less. Examples of such resins include styrene maleic acid resins, rosin-modified maleic acid resins, epoxy resins, polyester resins, polyurethane resins, phenol resins, and the like.

To afford water resistance to the cured film, the acrylic resin and the resin that is other than the acrylic resin and has an ethylenic unsaturated group and a carboxyl group preferably have a weight-average molecular weight of 5,000 or more, more preferably 15,000 or more, still more preferably 20,000 or more. In addition, the weight-average molecular weight is preferably 100,000 or less, more preferably 75,000 or less, and still more preferably 50,000 or less in order to afford water solubility to the resin. In this DESCRIPTION, the weight-average molecular weight can be determined by measurement in terms of polystyrene using gel permeation chromatography (GPC).

The acrylic resin and the resin that is other than the acrylic resin and has an ethylenic unsaturated group and a carboxyl group are contained preferably in an amount of 5 mass% or more, more preferably 10 mass% or more, in the ink used in the present invention in order to afford ink viscosity desired for printing and sensitivity desired for curing. The amount is preferably 60 mass% or less, more preferably 50 mass% or less, still more preferably 40 mass% or less, in order to afford ink fluidity and roller-to-roller transferability that are desired for printing.

In addition, the ink used in the present invention preferably contains (b) a pigment and (c) a (meth)acrylate having a hydroxyl group.

The (b) pigment to be preferably used is at least one selected from inorganic pigments and organic pigments.

Specific examples of inorganic pigments used in the present invention include titanium oxide, zinc oxide, calcium carbonate, barium sulfate, iron red, cadmium red, chrome yellow, zinc yellow, Prussian blue, ultramarine, organic bentonite, alumina white, iron oxide, carbon black, graphite, aluminum, and the like.

Specific examples of organic pigments include phthalocyanine pigments, soluble azo pigments, insoluble azo pigments, lake pigments, quinacridone pigments, isoindoline pigments, indanthrene pigment, and metal complex pigments. More specific examples include phthalocyanine blue, phthalocyanine green, azo red, monoazo red, monoazo yellow, disazo red, disazo yellow, quinacridone red, quinacridone magenta, isoindoline yellow, and the like.

These (b) pigments can be used singly or in mixture of two or more kinds thereof.

The amount of the (b) pigment contained in the ink used in the present invention is preferably 5 mass% or more, more preferably 10 mass% or more, still more preferably 15 mass% or more, in 100 mass% of the ink in order to afford density to the printing face. In addition, the amount is preferably 50 mass% or less, more preferably 45 mass% or less, still more preferably 40 mass% or less, in 100 mass% of the ink in order to enhance the fluidity of the ink and to afford good roller-to-roller transferability.

In addition, using the (c) (meth)acrylate having a hydroxyl group makes it possible to enhance the fluidity of the ink, and to adjust ink properties such as viscosity and a leveling property because a hydroxyl group has the effect of dispersing and stabilizing a pigment. In addition, the irradiation with an active energy ray cures the ink, thus making it possible to enhance the water resistance of the cured film.

That the (c) (meth)acrylate having a hydroxyl group has a hydroxyl value of 50 mgKOH/g or more enhances the pigment dispersibility, and thus, is preferable. The hydroxyl value is more preferably 75 mgKOH/g or more, still more preferably 100 mgKOH/g or more. In addition, that the hydroxyl value is 200 mgKOH/g or less makes it possible to retain the fluidity of the ink well, and thus, is preferable. The hydroxyl value is more preferably 180 mgKOH/g or less, still more preferably 160 mgKOH/g or less.

Specific examples of the (c) (meth)acrylate having a hydroxyl group include a poly(meth)acrylate of a polyhydric alcohol such as trimethylolpropane, glycerin, pentaerythritol, diglycerine, ditrimethylolpropane, isocyanuric acid, or dipentaerythritol, and alkylene oxide adducts thereof. More specific examples include di(meth)acrylate of trimethylolpropane, di(meth)acrylate of glycerin, di- or tri(meth)acrylate of pentaerythritol, di- or tri(meth)acrylate of diglycerine, di- or tri(meth)acrylate of ditrimethylolpropane, di-, tri-, tetra-, or penta(meth)acrylate of dipentaerythritol, and ethylene oxide adducts, propylene oxide adducts, and tetraethylene oxide adducts thereof. In addition, it is possible to use a (meth)acrylate obtained by allowing a compound having a plurality of hydroxyl groups and carboxyl groups to react with a glycidyl (meth)acrylate. Examples of compounds having a plurality of hydroxyl groups and carboxyl groups include bisphenol A, hydrogenated bisphenol A, bisphenol F, and hydrogenated bisphenol F. More specific examples include di(meth)acrylate of bisphenol A, di(meth)acrylate of bisphenol F, di(meth)acrylate of hydrogenated bisphenol A, di(meth)acrylate of hydrogenated bisphenol F, and ethylene oxide adducts, propylene oxide adducts, and tetraethylene oxide adducts thereof. Among these, pentaerythritol tri(meth)acrylate, diglycerine tri(meth)acrylate, and ditrimethylolpropane tri(meth)acrylate are particularly preferable from viewpoints of excellent pigment dispersibility and enhanced scumming resistance.

The amount of the (c) (meth)acrylate having a hydroxyl group is preferably 10 mass% or more, more preferably 20 mass% or more, still more preferably 30 mass% or more, in 100 mass% of the ink because such an amount makes it possible to afford ink viscosity suitable for printing. In addition, the amount is preferably 70 mass% or less, more preferably 60 mass% or less, still more preferably 50 mass% or less, because such an amount makes it possible to obtain a cured film having good sensitivity and sufficient water resistance.

The ink used in the present invention preferably further contains (d) a difunctional (meth)acrylate having a C₈₋₁₈ linear aliphatic skeleton (hereinafter referred to as the "(d) aliphatic difunctional (meth)acrylate"). Among the (d) aliphatic difunctional (meth)acrylates, however, such (meth)acrylates having a hydroxyl group are classified into the (c) (meth)acrylate having a hydroxyl group. It is preferable that the (d) aliphatic difunctional (meth)acrylate has a hydroxyl value of 5 mgKOH/g or less, and exhibits hydrophobicity. The linear aliphatic skeleton of the (d) aliphatic difunctional (meth)acrylate may be either a straight-chain skeleton or a branched skeleton, and may have a saturated bond or an unsaturated bond. The (d) aliphatic difunctional (meth)acrylate that exhibits hydrophobicity has suitably poor compatibility with the (b) resin having an ethylenic unsaturated group and a carboxyl group and the (c) (meth)acrylate having a hydroxyl group, and inhibits the molecular chains in the ink from being entwined with one another, thus inhibiting the spinnability of the ink being transferred, and enhancing the ink transferability. In addition, that the ink used in the present invention contains the (d) aliphatic difunctional (meth)acrylate which exhibits hydrophobicity leads to decreasing the surface tension of the ink, enhancing the wettability to the substrate, and thus enhancing the ink transferability and the adhesion to the substrate. Here, the ink transferability refers to a transfer rate achieved when the ink is transferred from a rubber (metal) roller to a rubber (metal) roller, from a rubber (metal) roller to a plate, from a plate to a blanket, or from a blanket to a substrate.

The (d) aliphatic difunctional (meth)acrylate preferably has 8 or more carbon atoms, more preferably 9 or more carbon atoms, still more preferably 10 or more carbon atoms, in order to retain, to a suitable degree, the compatibility with the (b) resin having an ethylenic unsaturated group and a carboxyl group and the (c) (meth)acrylate having a hydroxyl group, and to enhance the ink transferability. The (d) aliphatic difunctional (meth)acrylate preferably has 18 or less carbon atoms, more preferably 16 or less carbon atoms, still more preferably 14 or less carbon atoms, in order to inhibit a decrease in the compatibility with the (b) resin having an ethylenic unsaturated group and a carboxyl group and the (c) (meth)acrylate having a hydroxyl group, an increase in the ink viscosity, and a decrease in the ink transferability.

The amount of the (d) aliphatic difunctional (meth)acrylate contained in the ink is preferably 1 mass% or more, more preferably 2 mass% or more, still more preferably 3 mass% or more, with respect to the total mass of the ink in order to retain the compatibility to a suitable degree and enhance the ink transferability. For the same reason, the amount of the (d) aliphatic difunctional (meth)acrylate is preferably 20 mass% or less, more preferably 15 mass% or less, still more preferably 10 mass% or less, still more preferably 8 mass% or less, in 100 mass% of the ink used in the present invention.

Specific examples of the (d) aliphatic difunctional (meth)acrylate include 1,8-octanediol di(meth)acrylate, 1,9-nonanediol di(meth)acrylate, 1,10-decanediol di(meth)acrylate, 1,11-undecanediol di(meth)acrylate, 1,12-dodecanediol di(meth)acrylate, 1,13-tridecanediol di(meth)acrylate, 1,14-tetradecanediol di(meth)acrylate, 1,15-pentadecanediol di(meth)acrylate, 1,16-hexadecanediol di(meth)acrylate, 1,17-heptadecanediol di(meth)acrylate, 1,18-octadecanediol di(meth)acrylate, 4-methyl-1,10-decanediol di(meth)acrylate, 4-ethyl-1,10-decanediol di(meth)acrylate, and the like. Other examples include polyester di(meth)acrylates having a C₈₋₁₈ aliphatic skeleton as a repeating unit. In addition, it is possible to contain two or more of these. Among the above-mentioned examples, 1,10-decanediol di(meth)acrylate is particularly preferable in order to retain, to a suitable degree, the compatibility with the (b) resin having an ethylenic unsaturated group and a carboxyl group and the (c) (meth)acrylate having a hydroxyl group, and to enhance the ink transferability. Here, the functional number refers to the number of (meth)acrylate-derived structures.

The (d) aliphatic difunctional (meth)acrylate preferably has a weight-average molecular weight of 100 or more, more preferably 150 or more, still more preferably 200 or more, in order to makes it possible to make the ink coating flexible and provide the ink with adhesion to the substrate. In addition, the weight-average molecular weight is preferably 1,000 or less, more preferably 700 or less, still more preferably 500 or less, because such a weight-average molecular weight leads to retaining the viscosity of the ink and improving the fluidity. In cases where the chemical structure is known, the weight-average molecular weight is the molecular weight of the compound itself. Additionally, in cases where the compound has a molecular weight distribution, the weight-average molecular weight can be obtained by measurement in terms of polystyrene using gel permeation chromatography (GPC).

The ratio of the (d) aliphatic difunctional (meth)acrylate is preferably 0.10 part by mass or more, more preferably 0.15 part by mass or more, still more preferably 0.20 part by mass or more, on the basis (1.00 part by mass) of the total amount of the (b) resin having an ethylenic unsaturated group and a carboxyl group, in order to retain the compatibility with the (a) resin to a suitable degree and to enhance the ink transferability. For the same reason, the ratio of the (d) aliphatic difunctional (meth)acrylate is preferably 0.60 part by mass or less, more preferably 0.45 part by mass or less, still more preferably 0.30 part by mass or less, on the basis (1.00 part by mass) of the total amount of the (b) resin having an ethylenic unsaturated group and a carboxyl group.

The ink according to the present invention preferably further contains (e) a urethane (meth)acrylate.

Hydrogen bonding between urethane bonds contained in the (e) urethane (meth)acrylate forms a hard segment, making it possible to impart tenacity to an ink coating, and in addition, enabling the ink coating to be firmly bonded to the surface of a plastic film or the like to thereby have good adhesion. In particular, the similarity in the molecular structural characteristics to the easy adhesion layer in the outer layer of the film according to the present invention makes it possible to enhance high affinity with the easy adhesion layer of the ink, and obtain extremely good adhesion. Furthermore, the (e) urethane (meth)acrylate contains a polyol to thereby form a soft segment, thus making it possible to impart flexibility to the ink coating.

In addition, the (e) urethane (meth)acrylate preferably has any one or more of an ester structure and a polycarbonate structure. The urethane (meth)acrylate having any one or more of an ester structure and a polycarbonate structure enables such a rigid structure to effectively enhance the heat resistance and coating properties of an ink. In addition, the rigid structure inhibits entwinement of the molecular chains formed, makes the viscosity of the ink low, enhances the fluidity of the ink, and thus, makes it possible to achieve good transfer during printing.

Examples of preferable alcohols that give an ester structure include a polyhydric alcohol. In addition, examples of dicarboxylic acids that give an ester structure include, but are not limited particularly to: phthalic acids, isophthalic acids, terephthalic acids, adipic acids, oxalic acids, maleic acids, fumaric acids, sebacic acids, and the like. Among these, isophthalic acids and adipic acids are relatively inexpensive, have good heat resistance, retain good compatibility with ink, and thus, are particularly preferable.

In addition, examples of carbonate polyols that give a urethane having a carbonate structure include pentamethylene carbonate diol, hexamethylene carbonate diol, hexane carbonate diol, decane carbonate diol, and the like. However, the high cohesive force of carbonate bonds leads to thickening and degradation of compatibility with ink as the amount of carbonate bonds increases. Accordingly, pentamethylene carbonate diol or hexamethylene carbonate diol, which has a branched chain that inhibits the hydrogen bonding strength of carbonate bonds, is particularly preferable.

In addition, the (e) urethane (meth)acrylate that can be preferably adopted satisfies any one of the below-mentioned characteristics (1) to (6):
(1) a compound having: a urethane structure obtained from a polyisocyanate having at least an aromatic ring structure or an alicyclic structure; and an ester structure obtained from a carboxylic acid;
(2) a compound having: a urethane bond structure obtained from a diisocyanate having at least an alicyclic structure; and an ester structure obtained from an adipic acid or an isophthalic acid;
(3) a compound having: a urethane structure obtained from a polyisocyanate having at least an aromatic ring structure or an alicyclic structure; and a carbonate structure composed of a carbonate dipolyol;
(4) a compound having: a urethane structure obtained from a diisocyanate having at least an alicyclic structure; and a carbonate structure selected from at least one selected from polypentamethylene carbonate diol and polyhexamethylene carbonate diol;
(5) a compound having a urethane structure and an acrylic group, wherein the compound is obtained by allowing a hydroxyl-group-containing acrylic acid ester to react with an isocyanate compound; and
(6) a compound having: a urethane structure obtained by allowing a pentaerythritol triacrylate to react with a diisocyanate compound having an aromatic ring structure; and an acrylic group.

The (e) urethane (meth)acrylate preferably has a weight-average molecular weight of 100 or more because such a weight-average molecular weight makes it possible to enhance the hot-water resistance of the ink. In addition, the weight-average molecular weight is more preferably 300 or more, still more preferably 500 or more, still more preferably 800 or more, still more preferably 1,000 or more, still more preferably 1,500 or more, from a viewpoint of allowing the ratio of the soft segment composed of a polyol component to be equal to or greater than a given value in one molecule, and thus making it possible to impart flexibility to the coating to enhance the adhesion. In addition, the weight-average molecular weight is preferably 10,000 or less, more preferably 7,000 or less, still more preferably 5,000 or less, from the viewpoint that retaining compatibility with the ink leads to retaining the fluidity of the ink, and making it possible to achieve a good coating appearance (leveling property) and scumming resistance during printing. The weight-average molecular weight of the resin can be calculated on the basis of measurement in terms of polystyrene using gel permeation chromatography (GPC).

The amount of the (e) urethane (meth)acrylate with respect to the total amount of the ink is preferably 1 mass% or more, more preferably 3 mass% or more, more preferably 5 mass% or more, still more preferably 7 mass% or more, because such an amount affords good adhesion. In addition, regulating the amount to 30 mass% or less, more preferably 20 mass% or less, still more preferably 15 mass% or less, makes it possible to retain good compatibility with the resin. Such an amount makes it possible to inhibit a rise in the tack of the ink and obtain a printed material the picture on which has good positional accuracy. In addition, such an amount makes it possible to retain the fluidity of the ink suitably, thus making it possible to obtain a printed material having a good leveling property, and in addition, having no scum, and thus, is preferable.

The ink to be used in the present invention preferably contains a photopolymerization initiator particularly when the ink is cured with ultraviolet light. In addition, the ink may contain a sensitizer to assist the effect of the photopolymerization initiator.

Examples of general photopolymerization initiators include α-aminoalkylphenon initiators, thioxanthone initiators, and the like, and the ink preferably contains an acylphosphine oxide compound in addition to the initiator. The acylphosphine oxide compound absorbs light in a long-wavelength region of 350 nm or more, and thus, has high sensitivity also in a system containing a pigment that absorbs or reflects ultraviolet light. In addition, such an acylphosphine oxide compound has a photobleaching effect, by which the compound no longer absorbs light once the compound has undergone reaction, and this effect provides excellent internal curability.

Specific examples of α-aminoalkylphenon initiators include 2-benzyl-2-dimethylamino-1-(4-morpholinophenyl)-butanone-1,2-dimethylamino-2-(4-methyl-benzyl)-1-(4-morpholin-4-yl-phenyl)-butane-1-one, and 2-methyl-1-[-4(methylthio)phenyl]-2-morpholinopropane-one. These may be used singly or in combination. These polymerization initiators are preferable from a viewpoint of easy availability.

Examples of thioxanthone initiators include 2,4-diethylthioxanthone, 2-isopropylthioxanthone, 2-chlorothioxanthone, and the like.

The ink containing such a photopolymerization initiator in an amount of 0.1 mass% or more with respect to the total mass of the ink makes it possible to obtain good sensitivity, and thus, is preferable. The amount is more preferably 1 mass% or more, still more preferably 3 mass% or more. In addition, the ink containing such a photopolymerization initiator in an amount of 20 mass% or less leads to enhancing the storage stability of the ink, and thus, is preferable. The amount is more preferably 15 mass% or less, and still more preferably 10 mass% or less.

Specific examples of sensitizers include 2,4-diethylthioxanthone, isopropylthioxanthone, 2,3-bis(4-diethylaminobenzal)cyclopentanone, 2,6-bis(4-dimethylaminobenzal)cyclohexanone, 2,6-bis(4-dimethylaminobenzal)-4-methylcyclohexanone, Michler's ketone, 4,4-bis(diethylamino)-benzophenone, 4,4-bis(dimethylamino)chalcone, 4,4-bis(diethylamino)chalcone, p-dimethylaminocinnamylidene indanone, p-dimethylaminobenzylidene indanone, 2-(p-dimethylamino phenyl vinylene)-isonaphthothiazole, 1,3-bis(4-dimethylaminobenzal)acetone, 1,3-carbonyl-bis(4-diethylaminobenzal)acetone, 3,3-carbonyl-bis(7-diethylamino coumarin), N-phenyl-N-ethyl ethanolamine, N-phenylethanolamine, N-tolyldiethanolamine, isoamyl dimethylaminobenzoate, isoamyl diethylaminobenzoate, 3-phenyl-5-benzoylthiotetrazole, and 1-phenyl-5-ethoxycarbonyl thiotetrazole, and the like.

In cases where the ink contains a sensitizer, the amount of the sensitizer is preferably 0.1 mass% or more, more preferably 1 mass% or more, still more preferably 3 mass% or more, in the ink because such an ink can obtain good sensitivity. Additionally, from a viewpoint of enhancing the storage stability of the ink, the amount is preferably 20 mass% or less of the ink, more preferably 15 mass% or less, still more preferably 10 mass% or less.

In the ink used in the present invention, the photopolymerization initiator and the sensitizer can be used singly or in combination of two or more kinds thereof.

The ink used in the present invention preferably contains an emulsifier. The ink containing an emulsifier makes it possible that the ink takes in a suitable amount (generally said to be 10 to 20 mass% of the total amount of the ink) of dampening water and is emulsified during offset printing, thus increasing the repellency of the non-image area against the dampening water to thereby enhance the scumming resistance of the ink.

The ink used in the present invention may contain another component to the extent that containing such a component does not impair the effects of the present invention.

Suitable examples of the ink used in the present invention include the inks described in WO2017/47817 and WO2018/163941.

### EXAMPLES

Below, the present invention will be specifically described with reference to Examples. However, the present invention is not to be construed as limited to these Examples.

### <Raw materials for ink>

### Pigment: Lionol Blue FG7330 (manufactured by Toyocolor Co., Ltd.)

Acrylic resin 1: this acrylic resin 1 was obtained by allowing 0.6 equivalent weight of glycidyl methacrylate to undergo addition reaction with the carboxyl group of a copolymer composed of 25 mass% of methyl methacrylate, 25 mass% of styrene, and 50 mass% of methacrylic acid. The resin 1 obtained had a weight-average molecular weight of 34,000, an acid value of 102 mgKOH/g, and an iodine value of 2.0 mol/kg.

Hydroxyl (meth)acrylate: "Miramer" (registered trademark) M340 (manufactured by Miwon Specialty Chemical Co., Ltd.); a mixture of (meth)acrylate having a hydroxyl group, pentaerythritol triacrylate, and pentaerythritol tetraacrylate; having a hydroxyl value of 115 mgKOH/g

Aliphatic difunctional (meth)acrylate: 1,10-decanediol diacrylate (NK ester A-DOD-N, manufactured by Shin-Nakamura Chemical Co., Ltd.); having a hydroxyl value of 0 mgKOH/g

Urethane acrylate: this urethane acrylate is composed of an alicyclic diisocyanate (hydrogenated XDI), carboxylic acids (isophthalic acid and adipic acid), a polyol, and 2-hydroxyethyl acrylate, having a weight-average molecular weight (Mw) of 3600, and having a urethane bond fraction of 8 mass%.

Photopolymerization initiator 1: 2,4,6-trimethylbenzoyl-diphenyl-phosphine oxide "LUCIRIN" (registered trademark) TPO (manufactured by BASF SE)

Photopolymerization initiator 2: 2-[4-(methylthio)benzoyl]-2-(4-morpholinyl)propane "IRGACURE" (registered trademark) 907 (manufactured by BASF SE)

Sensitizer: 4,4-bis(diethylamino)benzophenone (manufactured by Hodogaya Chemical Co., Ltd.).

Extender pigment: "MICRO ACE" (registered trademark) P-3 (manufactured by Nippon Talc Co., Ltd.)

Polymerization inhibitor: p-methoxyphenol (manufactured by Wako Pure Chemical Industries, Ltd.)

Emulsifier: "RHEODOL" (registered trademark) TW-L120 (manufactured by Kao Corporation) having an HLB value of 16.7

Additive: lauryl acrylate (manufactured by Wako Pure Chemical Industries, Ltd.)

Wax: "KTL" (registered trademark) 4N (manufactured by Kitamura Limited).

### <Film>

Film 1: a polyamide film "BONYL-Q" (manufactured by Kohjin Film & Chemicals Co., Ltd.); a film having an easy adhesion layer; having a film thickness of 15 µm. The easy adhesion layer contains a polyurethane obtained by use of a polycarbonate polyol as a diol component.

Film 2: a polyamide film "EMBLEM" (registered trademark) ON (manufactured by Unitika Ltd.) the surface of which was coated with "ETERNACOLL" (registered trademark) UW5502 (a polyurethane obtained by use of a polycarbonate polyol as a diol component, (manufactured by Ube Industries, Ltd.)) 10-fold diluted with water; having a film thickness of 15 µm.

Film 3: a polyamide film "EMBLEM" (registered trademark) ON (manufactured by Unitika Ltd.) the surface of which was coated with a mixture obtained by adding 1 part by mass of "SNOWTEX" (registered trademark) ST-C (colloidal silica having a particle diameter of 12 nm, manufactured by Nissan Chemical Corporation) to 100 parts by mass of "ETERNACOLL" (registered trademark) UW5502 (a polyurethane obtained by use of a polycarbonate polyol as a diol component, (manufactured by Ube Industries, Ltd.)) followed by diluting the resulting mixture with water 10-fold; having a film thickness of 15 µm.

Film 4: a polyamide film "EMBLEM" (registered trademark) ON (manufactured by Unitika Ltd.) the surface of which was coated with a mixture obtained by adding 5 parts by mass of "SNOWTEX" (registered trademark) ST-C (colloidal silica having a particle diameter of 12 nm, manufactured by Nissan Chemical Corporation) to 100 parts by mass of "ETERNACOLL" (registered trademark) UW5502 (a polyurethane obtained by use of a polycarbonate polyol as a diol component, (manufactured by Ube Industries, Ltd.)) followed by diluting the resulting mixture with water 10-fold; having a film thickness of 15 µm.

Film 5: a polyamide film "EMBLEM" (registered trademark) ON (manufactured by Unitika Ltd.) the surface of which was coated with "ETERNACOLL" (registered trademark) UW5002E (a polyurethane obtained by use of a polycarbonate polyol as a diol component, (manufactured by Ube Industries, Ltd.)) 10-fold diluted with water; having a film thickness of 15 µm.

Film 6: a polyamide film "EMBLEM" (registered trademark) ON (manufactured by Unitika Ltd.) the surface of which was coated with "ETERNACOLL" (registered trademark) UW3018 (a polyurethane obtained by use of a polycarbonate polyol as a diol component, (manufactured by Ube Industries, Ltd.)) 10-fold diluted with water; having a film thickness of 15 µm.

Film 7: a polyamide film "EMBLEM" (registered trademark) ON (manufactured by Unitika Ltd.) the surface of which was coated with "ELASTRON" (registered trademark) H38 (a polyurethane containing a polyether polyol as a diol component, manufactured by DKS Co., Ltd.) 10-fold diluted with water; having a film thickness of 15 µm.

Film 8: a polyamide film "EMBLEM" (registered trademark) ON (manufactured by Unitika Ltd.) the surface of which was coated with "ELASTRON" (registered trademark) E37 (a polyurethane containing a polyester polyol as a diol component, manufactured by DKS Co., Ltd.) 10-fold diluted with water; having a film thickness of 15 µm.

### <Measurement of number of radicals present in outer layer of film>

An electron spin resonance (ESR) device ELEXSSYS E580 (manufactured by Bruker Corporation) was used to measure the number of radicals present in the outer layer of the film irradiated with a 30-kGy electron beam. In this regard, the film sample irradiated with an electron beam was stored in a low-temperature atmosphere using dry ice immediately after the irradiation, and was brought back in a roomtemperature atmosphere immediately before a measurement was taken of the number of radicals. The conditions in detail are as below-mentioned.

Measurement temperature: room temperature
Central magnetic field: at and around 3368 G
Range of magnetic field sweep: 400 G
Modulation: 100 kHz, 2 G
Microwave: 9.44 GHz, 0.1 mW
Sweep time: 83.89 s × 4.
Time constant: 163.84 ms
Number of data points: 1024 points
Cavity: Super-High-Q

The measurement results of the number of radicals are tabulated in Table 1.

### <FT-IR-ATR measurement of outer layer of the film>

The outer layer of the film was subjected to measurement by an attenuated total reflection (ATR) method using an FT-IR device ("FTS-55A", manufactured by Bio-Rad Digilab), wherein the layer was each of the easy adhesion layer-containing face of the film 1 and the coating face sides of the films 2 to 8. The v1/v2 value was calculated from the spectrum obtained, assuming that the area of a peak present between 1510 to 1550 cm⁻¹ was the peak intensity v1 of the stretching vibration of the nitrogen-hydrogen single bond, and that the area of a peak present between 1720 to 1760 cm⁻¹ was the peak intensity v2 of the stretching vibration of the carbon-oxygen double bond. Here, for calculation of vl, a straight line was drawn between the value at 1510 cm⁻¹ and the value at 1550 cm⁻¹, and used as a baseline. In the range of from 1510 cm⁻¹ to 1550 cm⁻¹, the area surrounded by this baseline and the spectrum obtained was calculated as v1. In the same manner, for calculation of v2, a straight line was drawn between the value at 1720 cm⁻¹ and the value at 1760 cm⁻¹, and in the range of from 1720 to 1760 cm⁻¹, the area surrounded by this baseline and the spectrum obtained was calculated as v2. The evaluation results of v1/v2 are tabulated in Table 1.

### <Measurement of surface roughness Ra of film coating face>

The easy adhesion layer-containing face of the film 1 and the coating faces of the films 2 to 8 were subjected to surface roughness Ra measurement in accordance with JIS R 1683: 2007, the standard titled "Test method for surface roughness of ceramic thin films by atomic force microscopy", using an atomic force microscope Dimension Fast Scan (manufactured by Bruker Corporation). The measurement results of Ra are tabulated in Table 1.

### <Waterless offset printing test>

A waterless offset printing plate (TAN-E, manufactured by Toray Industries, Inc.) was mounted on an offset press (Oliver 266EPZ, manufactured by Sakurai Graphic Systems Corporation), and a printed material was obtained by printing a film using each ink having each of the compositions described in Examples 1 to 4, 6 to 10, and Comparative Examples 1 and 2.

### <Offset printing test>

An offset printing plate (XP-F, manufactured by Fujifilm Corporation) was mounted on an offset press (Oliver 266EPZ, manufactured by Sakurai Graphic Systems Corporation), and a printed material was obtained by printing a film using the ink of Example 5 and using, as dampening water, a mixture of tap water and 3% by weight of etching solution (SOLAIA-505, manufactured by T & K Toka Co., Ltd.).

### <Electron beam radiation conditions>

An electron beam irradiation device (LB1036, manufactured by Eye Electron Beam Co., Ltd.) was used to cure an ink under conditions at an accelerating voltage of 110 kV, a beam current of 5.0 mA, and an absorbed dose of 30 kGy to produce a printed material.

### <Irradiation conditions of ultraviolet light>

An ultraviolet light irradiation device (having one ultra-high-pressure metal halide lamp, 120 W/cm; manufactured by Ushio Inc.) was used to cure an ink at a belt conveyor speed of 50 m/minute to produce a printed material.

### <Evaluation of ink transferability>

An active energy ray-curable lithographic ink described in each of Examples and Comparative Examples was used to perform a waterless offset printing test (Examples 1 to 4, 6 to 10, and Comparative Examples 1 to 2) or an offset printing test (Example 5), and each film listed in Table 2 was printed 1,000 m at a printing speed of 200 m/minute at an active energy ray-curable lithographic ink supply amount of 50%. Then, the ink was cured using an electron beam or ultraviolet light to produce a printed material. A sheet of high-quality paper was used as paper white (the criterion of the reflectance density of 0) to evaluate the density of the solid image portion using a reflectance densitometer (SpectroEye, status E, manufactured by GretagMacbeth GmbH). A larger ink transferability value was judged to be better.

### <Peel strength>

The peel strength test for a printed material on a film and the evaluation criterion were based on the standard number JIS K 6854-2: 1999 titled "Adhesives - Determination of peel strength of bonded assemblies - Part 2: 180-degree peel". An active energy ray-curable lithographic ink described in each of Examples and Comparative Examples was used to perform a waterless offset printing test (Examples 1 to 4, 6 to 10, and Comparative Examples 1 to 2) or an offset printing test (Example 5), and each film listed in Table 2 was printed 1,000 m at a printing speed of 200 m/minute at an active energy ray-curable lithographic ink supply amount of 50%. Then, the ink was cured using an electron beam or ultraviolet light to produce a printed material. A two-component adhesive agent (LX-500/KR-90S, manufactured by DIC Corporation) was applied to the surface of a printed material so as to be 3.5 g/m², and to the resulting material, a laminate film was adhered. Then, the resulting material was placed in an oven, left to stand at a temperature of 60°C for 1 day, and thus cured to produce a peel strength evaluation sample. In addition, part of the peel strength evaluation sample was immersed in hot water at 100°C for 30 minutes to produce a boiled peel strength evaluation sample. Using a cutter, the sample was cut to have a width of 15 mm, and used to measure the peel strength of each of the printed material and the film. For the measurement, a tensile tester was used to perform a 180-degree peel test at a loading rate of 100 mm/minute.

With a peel strength of less than 1 N/15 mm, the adhesion was judged extremely insufficient; with 1 N/15 mm or more and less than 3 N/15 mm, the adhesion was judged insufficient; with 3 N/15 mm or more and less than 5 N/15 mm, the adhesion was judged good; and with 5 N/15 mm or more, the adhesion was judged extremely good.

### [Example 1]

The components of the ink were weighed out as per the composition mentioned in Table 2, and passed three times through a three roll mill "EXAKT" (registered trademark) M-80S (manufactured by Exakt Technologies, Inc.) under the Gap 1 conditions to obtain the ink. The ink produced was printed on the film 1 by a waterless offset printing method, and cured using an electron beam irradiation device to produce a printed material. The ink transferability was 1.60, which was good. The peel strength was 5.7 N/15 mm, that is, the adhesion was extremely good. In addition, the peel strength after boiling was 5.8 N/15 mm, that is, the adhesion after boiling was extremely good.

### [Example 2]

The components of the ink were weighed out as per the composition mentioned in Table 2, and passed three times through a three roll mill "EXAKT" (registered trademark) M-80S (manufactured by Exakt Technologies, Inc.) under the Gap 1 conditions to obtain the ink. The ink produced was printed on the film 1 by a waterless offset printing method, and cured using an electron beam irradiation device to produce a printed material. The ink transferability was 1.75, which was extremely good. The peel strength was 6.4 N/15 mm, that is, the adhesion was extremely good. In addition, the peel strength after boiling was 6.6 N/15 mm, that is, the adhesion after boiling was extremely good.

### [Example 3]

The components of the ink were weighed out as per the composition mentioned in Table 2, and passed three times through a three roll mill "EXAKT" (registered trademark) M-80S (manufactured by Exakt Technologies, Inc.) under the Gap 1 conditions to obtain the ink. The ink produced was printed on the film 1 by a waterless offset printing method, and cured using an electron beam irradiation device to produce a printed material. The ink transferability was 1.72, which was extremely good. The peel strength was 8.1 N/15 mm, that is, the adhesion was extremely good. In addition, the peel strength after boiling was 8.5 N/15 mm, that is, the adhesion after boiling was extremely good.

### [Example 4]

The components of the ink were weighed out as per the composition mentioned in Table 2, and passed three times through a three roll mill "EXAKT" (registered trademark) M-80S (manufactured by Exakt Technologies, Inc.) under the Gap 1 conditions to obtain the ink. The ink produced was printed on the film 1 by a waterless offset printing method, and cured using an ultraviolet light irradiation device to produce a printed material. The ink transferability was 1.60, which was good. The peel strength was 4.6 N/15 mm, that is, the adhesion was good. In addition, the peel strength after boiling was 4.4 N/15 mm, that is, the adhesion after boiling was good.

### [Example 5]

The components of the ink were weighed out as per the composition mentioned in Table 2, and passed three times through a three roll mill "EXAKT" (registered trademark) M-80S (manufactured by Exakt Technologies, Inc.) under the Gap 1 conditions to obtain the ink. The ink produced was printed on the film 1 by an offset printing method, and cured using an electron beam irradiation device to produce a printed material. The ink transferability was 1.55, which was good. The peel strength was 3.5 N/15 mm, that is, the adhesion was good. In addition, the peel strength after boiling was 3.3 N/15 mm, that is, the adhesion after boiling was good.

### [Examples 6 to 8]

The printing experiment was performed by the same operation as in Example 1 except that the kind of the film was changed to the film 2 (Example 6), film 3 (Example 7), and film 4 (Example 8). The ink transferability and the adhesion to the film were evaluated. The ink transferability of each film was 1.60, which was good. The peel strength was 4.8 N/15 mm in Example 6, that is, the adhesion was good. In Examples 7 and 8, the peel strength was 5.1 N/15 mm and 6.1 N/15 mm respectively, that is, the adhesion was very good. In addition, the peel strength after boiling was 4.5 N/15 mm in Example 6, that is, the adhesion after boiling was good. In Examples 7 and 8, the peel strength was 5.2 N/15 mm and 5.9 N/15 mm respectively, that is, the adhesion after boiling was very good.

### [Examples 9 and 10]

The printing experiment was performed by the same operation as in Example 1 except that the kind of the film was changed to the film 5 (Example 9) and film 6 (Example 10). The ink transferability and the adhesion to the film were evaluated. The ink transferability of each film was 1.60, which was good. The peel strength was 6.1 N/15 mm in Example 9, that is, the adhesion was very good. The peel strength was 4.4 N/15 mm in Example 10, that is, the adhesion was good. In addition, the peel strength after boiling was 4.7 N/15 mm in Example 9 and 4.6 N/15 mm in Example 10, that is, the adhesion after boiling was good.

### [Comparative Example 1]

The printing experiment was performed by the same operation as in Example 1 except that the kind of the film was changed to the film 7. The ink transferability and the adhesion to the film were evaluated. The ink transferability was 1.60, which was good. The peel strength was 4.2 N/15 mm, that is, the adhesion was good. However, the peel strength after boiling was 1.6 N/15 mm, that is, the adhesion after boiling was insufficient.

### [Comparative Example 2]

The printing experiment was performed by the same operation as in Example 1 except that the kind of the film was changed to the film 8. The ink transferability and the adhesion to the film were evaluated. The ink transferability was 1.60, which was good. The peel strength was 4.6 N/15 mm, that is, the adhesion was good. However, the peel strength after boiling was 1.9 N/15 mm, that is, the adhesion after boiling was insufficient.

**[Table 1]**

| Film | Type of film (number) | 1 | 2 | 3 | 4 | 5 | 6 | 7 | 8 |
|---|---|---|---|---|---|---|---|---|---|
| | Easy adhesion layer | Yes | Yes | Yes | Yes | Yes | Yes | Yes | Yes |
| Composition of easy adhesion layer | Polyurethane Type of polyol | Poly carbonate | Poly carbonate | Polycarbonate | Poly carbonate | Poly carbonate | Poly carbonate | Polyether | Polyester |
| | Amount of polyurethane (parts by weight) | 100 | 100 | 100 | 100 | 100 | 100 | 100 | 100 |
| | Amount of colloidal silica (parts by weight) | - | - | 1 | 5 | - | - | - | - |
| Film thickness (µm) | | 15 | 15 | 15 | 15 | 15 | 15 | 15 | 15 |
| Evaluation | Number of radicals per 1 g of film after irradiation with electron beam (× 10¹⁸) radicals/g | 2.1 | 2.3 | 2.2 | 2.3 | 2.2 | 2.1 | 1.4 | 1.7 |
| | Number of radicals per 1 cm² of film after irradiation with electron beam (× 10¹⁵) radicals /cm² | 3.6 | 3.9 | 3.7 | 3.9 | 3.7 | 3.6 | 2.4 | 2.9 |
| | vl/v2 | 1.4 | 1.4 | 1.4 | 1.4 | 0.8 | 2.2 | - | - |
| | Surface roughness Ra (nm) | 6.5 | 3.2 | 5.4 | 10.2 | 3.5 | 3.1 | 3.5 | 3.3 |

**[Table 2]**

| | | Examples | | | | | | | | | | Comparative Examples | |
|---|---|---|---|---|---|---|---|---|---|---|---|---|---|
| | | 1 | 2 | 3 | 4 | 5 | 6 | 7 | 8 | 9 | 10 | 1 | 2 |
| Composition of ink (mass%) | Pigment | 18.0 | 18.0 | 18.0 | 18.0 | 18.0 | 18.0 | 18.0 | 18.0 | 18.0 | 18.0 | 18.0 | 18.0 |
| | Acrylic resin 1 | 11.9 | 11.9 | 11.9 | 11.9 | 11.9 | 11.9 | 11.9 | 11.9 | 11.9 | 11.9 | 11.9 | 11.9 |
| | Hydroxyl (meth)acrvlate | 63.0 | 60.0 | 58.0 | 48.0 | 62.0 | 63.0 | 63.0 | 63.0 | 63.0 | 63.0 | 63.0 | 63.0 |
| | Aliphatic difunctional (meth)acrylate | | 3.0 | | | | | | | | | | |
| | Urethane acrylate | | | 5.0 | | | | | | | | | |
| | Extender pigment | 2.0 | | 2.0 | 2.0 | 2.0 | 2.0 | 2.0 | 2.0 | 2.0 | 2.0 | 2.0 | 2.0 |
| | Photopolymerization initiator 1 | | | | 7.0 | | | | | | | | |
| | Photopolymerization initiator 2 | | | | 4.0 | | | | | | | | |
| | Sensitizer | | | | 4.0 | | | | | | | | |
| | Polymerization inhibitor | 0.1 | 0.1 | 0.1 | 0.1 | 0.1 | 0.1 | 0.1 | 0.1 | 0.1 | 0.1 | 0.1 | 0.1 |
| | Emulsifier | | | | | 1.0 | | | | | | | |
| | Additive | 4.0 | 4.0 | 4.0 | 4.0 | 4.0 | 4.0 | 4.0 | 4.0 | 4.0 | 4.0 | 4.0 | 4.0 |
| | Wax | 1.0 | 1.0 | 1.0 | 1.0 | 1.0 | 1.0 | 1.0 | 1.0 | 1.0 | 1.0 | 1.0 | 1.0 |
| Film | Type of film (number) | 1 | 1 | 1 | 1 | 1 | 2 | 3 | 4 | 5 | 6 | 7 | 8 |
| Lithographic printing method | | Waterless offset printing | Waterless offset printing | Waterless offset printing | Waterless offset printing | Offset printing | Waterless offset printing | Waterless offset printing | Waterless offset printing | Waterless offset printing | Waterless offset printing | Waterless offset printing | Waterless offset printing |
| Ink curing method | | Electron beam | Electron beam | Electron beam | Ultraviolet light | Electron beam | Electron beam | Electron beam | Electron beam | Electron beam | Electron beam | Electron beam | Electron beam |
| Evaluation | Ink transferability | 1.60 | 1.75 | 1.72 | 1.60 | 1.55 | 1.60 | 1.60 | 1.60 | 1.60 | 1.60 | 1.60 | 1.60 |
| | Peel strength (N/15 mm) | 5.7 | 6.4 | 8.1 | 4.6 | 3.5 | 4.8 | 5.1 | 6.1 | 6.1 | 4.4 | 4.2 | 4.6 |
| | Peel strength after boiling (N/15 mm) | 5.8 | 6.6 | 8.5 | 4.4 | 3.3 | 4.5 | 5.2 | 5.9 | 4.7 | 4.6 | 1.6 | 1.9 |

### Reference Signs List

- 1: Ink roller
- 2: Lithography plate
- 3: Printing cylinder
- 4: Blanket
- 5: Film
- 6: Support roller

## Claims

1. A method of producing a printed material, comprising the steps of: printing an ink on a film; and irradiating the ink-printed face with an active energy ray; wherein said film contains: a polyamide film layer; and a layer that, as the outermost layer of at least one face of said film, contains a polyurethane obtained by use of a polycarbonate polyol as a polyol component.

2. The method of producing a printed material according to claim 1, wherein an electron beam is radiated as said active energy ray.

3. The method of producing a printed material according to claim 1 or 2, wherein the outer layer of said film has radicals the number of which is 2 × 10¹⁸ radicals/g or more as a 30-kGy electron beam is radiated to the outer-side surface of the layer containing a polyurethane obtained by use of a polycarbonate polyol as a polyol component.

4. The method of producing a printed material according to any one of claims 1 to 3, wherein a surface of said film has a surface roughness Ra of 5 to 30 nm, said surface being the outer side of the layer containing a polyurethane obtained by use of a polycarbonate polyol as a polyol component.

5. The method of producing a printed material according to any one of claims 1 to 4, wherein, in the measurement on the film surface that is the outer side of said layer containing a polyurethane obtained by use of a polycarbonate polyol as a polyol component, v1/v2, which is the ratio of the peak intensity v1 of the stretching vibration of the carbon-nitrogen single bond to the peak intensity v2 of the stretching vibration of the carbon-oxygen double bond, is in the range of from 1 to 2, as determined by an FT-IR-ATR method.

6. The method of producing a printed material according to any one of claims 1 to 5, wherein said film has a thickness of 10 µm or more and 30 µm or less.

7. The method of producing a printed material according to any one of claims 1 to 6, wherein an active energy ray-curable ink containing (a) an acrylic resin having an acid value of 30 mgKOH/g or more and 250 mgKOH/g or less is used as said ink.

8. The method of producing a printed material according to claim 7, wherein said acrylic resin has an ethylenic unsaturated group, and wherein said ink contains (b) a pigment and (c) a (meth)acrylate having a hydroxyl group.

9. The method of producing a printed material according to claim 7 or 8, wherein said ink further contains (d) a difunctional (meth)acrylate having a C₈₋₁₈ linear aliphatic skeleton.

10. The method of producing a printed material according to any one of claims 7 to 9, wherein said ink further contains (e) a urethane (meth)acrylate.

11. The method of producing a printed material according to any one of claims 1 to 10, wherein the step of printing an ink on a film is performed using a waterless offset printing plate.

12. A laminate comprising: a film containing a polyamide film layer and a layer that, as the outermost layer of at least one face of said film, contains a polyurethane obtained by use of a polycarbonate polyol as a polyol component; and a cured product of an active energy ray-curable printing ink, wherein said cured product is laminated on a face of said film, said face being the outer side of the layer containing a polyurethane having a polycarbonate polyol used as a polyol component.
